# EUROPÄISCHE PATENTSCHRIFT

(11) **EP 3 205 479 B1**
(45) Veröffentlichungstag und Bekanntmachung des Hinweises auf die Patenterteilung: **20.12.2023**
(21) Anmeldenummer: 16154758.3
(22) Anmeldetag: 09.02.2016
(51) Int. Cl.: B29C 65/14, B29C 65/30, F16L 47/02, B29C 65/78, B29C 65/20, B29L 23/00

(54) **REFLEKTIONSINNENRING**
INTERNAL REFLECTION RING
BAGUE INTERNE DE REFLEXION

(43) Veröffentlichungstag der Anmeldung: 16.08.2017
(73) Patentinhaber: Georg Fischer Rohrleitungssysteme AG, 8201 Schaffhausen (CH)
(72) Erfinder: Hasific, Edin, 8207 Schaffhausen (CH); Rösch, Jürgen, 79853 Lenzkirch (DE)
(74) Vertreter: Fenner, Seraina

(56) Entgegenhaltungen:
- EP-A1- 0 312 712
- EP-B2- 0 312 712
- CH-A- 493 323
- JP-B2- 3 347 903

## Beschreibung

Die Erfindung betrifft eine Vorrichtung zum stirnseitigen Verschweissen von Kunststoffprofilen vorzugsweise Rohren beinhaltend Spannvorrichtungen zur Halterung der Kunststoffprofile in koaxialer Lage zueinander, eine Heizplatte zur Erzeugung der Wärmestrahlen zum berührungslosen Aufheizen der Kunststoffprofilenden und einen Reflektionsaussenring zur Reflektion der Wärmestrahlung an die Kunststoffprofilaussenseite.

Vorrichtungen zum Verschweissen von Kunststoffprofilen, wobei die Erwärmung der Kunststoffprofilenden berührungslos erfolgt, sind aus dem Stand der Technik bekannt und werden oft in chemischen wie auch in high-purity Bereichen angewandt, da dort eine hohe Anforderung an die Reinheit der Verbindung der Rohre gestellt wird. Aufgrund dessen ist eine berührungslose Verschweissung der Kunststoffprofilenden zu bevorzugen.

Die DE 44 16 518 A1 offenbart eine entsprechende Vorrichtung, wobei die Infrarot-Strahlungen des Widerstandsheizelements durch eine Schutzplatte aus Glaskeramikmaterial hindurch auf die zu erwärmenden Rohre strahlen. Nachteilig hierbei ist, dass die Wärmestrahlung bzw. die Infrarotstrahlung nur direkt auf die Stirnseite des zu verschweissenden Rohrendes auftreffen und dadurch die Erwärmung in die Tiefe des Rohres ungleich erfolgt und demzufolge beim Zusammenfügen der Rohrenden keine optimale Verschweissung aufgrund der ungleichmässigen Erwärmung erreicht wird.

Die JP 3347903 offenbart ebenfalls ein berührungsloses Schweissverfahren für Kunststoffrohre, wobei der Heizspiegel eine Kontur in den Stirnseiten aufweist, die die Wärmestrahlen nicht nur senkrecht auf die Stirnseite des Rohres treffen lässt sondern auch in einem Winkel, was wiederum die Stirnseite des Rohrendes etwas gleichmässiger aufheizt.

Nachteilig hierbei ist, dass auch hier die Wärmestrahlen nur auf die Stirnseite des Rohrendes treffen und nicht etwas weiter in die Tiefe des Rohres bzw. auf den Aussen-oder Innendurchmesser am Rohrende reichen. Zudem muss für jeden Rohrdurchmesser ein entsprechender Heizspiegel hergestellt werden um zu gewährleisten, dass die Kontur an der richtigen Stelle ist.

Die CH 493 323 offenbart eine Vorrichtung zum Anwärmen von zu verschweissenden Kunststoffformteilen, wobei diese über die Konvektion und Wärmeleitung erwärmt werden.

Die EP 0 312 712 A1 offenbart eine Verfahren und eine Einrichtung zum stirnseitigen Verscheissen rohrförmiger thermoplastischer Teile., wobei die Strahlungswärme ausschliesslich auf die Stirnseite der Rohre trifft.

Es ist Aufgabe der Erfindung eine Vorrichtung zum stirnseitigen Verschweissen von Kunststoffprofilen vorzugsweise Rohren vorzuschlagen, welche die Schweissnaht bzw. die innere Wulst wie auch die äussere Wulst der Schweissnaht verbessert und für einen weiten Bereich an unterschiedlichen Dimensionen von Kunststoffprofilen einsetzbar ist.

Diese Aufgabe wird erfindungsgemäss dadurch gelöst, dass an der Heizplatte ein Reflektionsinnenring angeordnet ist, wobei der Reflektionsinnenring die Wärmestrahlen bzw. IR-Strahlen der Heizplatte an die Kunststoffprofilinnenseite reflektiert.

Die Vorrichtung zum stirnseitigen Verschweissen von Kunststoffprofilen vorzugsweise Rohren beinhaltet Spannvorrichtungen zur Halterung der Kunststoffprofile in koaxialer Lage zueinander. Die Spannvorrichtungen sind vorzugsweise auf einer Grundplatte angeordnet, wobei sich mindestens eine Spannvorrichtung koaxial zur anderen verschieben lässt um die Kunststoffprofilenden miteinander zu verschweissen.

Zwischen den Spannvorrichtungen in denen die Rohrenden eingespannt sind, ist eine Heizplatte zur berührungslosen Erwärmung der Kunststoffprofilenden mittels Wärmestrahlen angeordnet. In der Heizplatte sind vorzugsweise Heizpatronen angeordnet, die die Heizplatte entsprechend erwärmen. Die Wärmestrahlen vorzugsweise IR-Strahlen, die durch die erwärmte Heizplatte erzeugt werden, prallen auf die Kunststoffprofilenden, wodurch sie erwärmt werden. Um eine optimale Erwärmung der Kunststoffprofilenden zu gewährleisten ist um die Heizplatte ein Reflektionsaussenring angeordnet. Dieser dient dazu, die Wärmestrahlung bzw. IR-Strahlung der Heizplatte an dessen Innenseite zu reflektieren und auf die Aussenmantelfläche der Kunststoffprofile zu projizieren. Dies ermöglicht ein gleichmässiges Aufheizen der Kunststoffprofilenden und dass die Erwärmung nicht nur über die Stirnseite sondern auch über die Aussenmantelfläche der Kunststoffprofilenden erfolgt.

Damit auch eine verbesserte und gleichmässige Erwärmung des Kunststoffprofilendes von innen erfolgen kann, ist ein Reflektionsinnenring an der Heizplatte angeordnet. Dadurch wird die Wärmestrahlung bzw. die IR-Strahlung die von der Heizplatte ausgeht am Reflektionsinnenring reflektiert und auf die Innenkontur bzw. die innere Mantelfläche der Kunstoffprofilenden bzw. der Kunststoffrohrenden projiziert. Dies ermöglicht ein gleichmässiges Erwärmen der Kunststoffprofilenden was die Voraussetzung für eine gute Verschweissung ist. Die Heizplatte ist vorzugsweise als runde Scheibe ausgebildet, was den Vorteil bringt, dass dieselbe Heizplatte für einen weiten Dimensionsbereich an Kunststoffprofilen bzw. Durchmesserbereich von Rohren eingesetzt werden kann. Zudem lassen sich die Heizpatronen in radialer Richtung in der Heizplatte anordnen, vorzugsweise regelmässig.

Die Heizplatte weist vorzugsweise Heizpatronen auf, die in radial erstreckenden Bohrungen entlang des Umfangs herum verteilt angeordnet sind. Aufgrund der Anordnung der Heizpatronen weist die Heizplatte im Zentrum eine Durchgangsbohrung auf. Diese dient hauptsächlich der Herstellung der Heizplatte bzw. dem Anbringen der Bohrung für die Heizpatronen.

Eine vorteilhafte Ausgestaltung der Erfindung liegt darin, dass der Reflektionsinnenring in der Durchgangsbohrung der Heizplatte angeordnet ist. Die zu verschweissenden Kunststoffprofilenden vorzugsweise Rohrenden sind zur Erwärmung konzentrisch bzw. koaxial zum Reflektionsinnenring ausgerichtet, wobei der Reflektionsinnenring ins Innere der Kunststoffprofile bzw. Rohre hineinragt und dadurch die Wärmestrahlen bzw. die IR-Strahlen der Heizplatte an der äusseren Mantelfläche des Reflektionsinnenrings reflektiert werden und auf die innere Mantelfläche des Kunststoffprofils bzw. Rohres treffen und so die Erwärmung von innen unterstützen.

Selbstverständlich ist auch ein Reflektionsinnenring vorstellbar, der nur auf den Stirnseiten der Heizplatte befestigt ist und nicht durch eine Durchgangsbohrung gesteckt wird.

Um eine gute Reflektion der Wärme-bzw. IR-Strahlen zu erreichen weist der Refelekionsinnenring eine maximale Rauheit von 1.2µm auf, insbesondere die Büchsen des Reflektionsinnenrings.

Vorzugsweise ist der Reflektionsinnenring aus wärmeleitfähigem Material hergestellt, insbesondere die Büchsen.

Zudem bringt der Reflektioninnenring den Vorteil mit sich, dass die Durchgangsbohrung in der Heizplatte, welche bedingt ist durch die Herstellung, durch das Anbringen des Reflektionsinnenrings verschlossen wird und eine Luftzirkulation vermieden bzw. unterdrückt werden kann. Dadurch erfolgt keine unerwünschte Wärmeabfuhr.

Die Wandung der Kunststoffprofilenden wird somit über die Wärmestrahlung, die von der Heizplatte direkt auf die Stirnseiten der Kunststoffprofile fällt erwärmt wie auch über den Reflektionsaussenring, der die Wärmestrahlung bzw. IR-Strahlung auf den Aussenumfang bzw. die äussere Mantelfläche der Kunststoffprofile projiziert und zudem noch über den Reflektionsinnenring, der ebenfalls die Wärmestrahlen bzw. IR-Strahlen der Heizplatte reflektiert und auf die Innenfläche der Kunststoffprofile projiziert sowie selbst Wärmestrahlen abgibt aufgrund der aufgenommenen Wärme durch das Anliegen an der Heizplatte.

Die Erfindung zeichnet sich auch dadurch aus, dass der Reflektionsinnenring längenveränderbar ausgebildet ist. Da sich die Breite der Heizplatte aufgrund der Erwärmung und Abkühlung immer wieder ausdehnt und zusammenzieht ist es wichtig, dass der Reflektionsinnenring die Längen bzw. Breitenveränderung ebenfalls mit macht. Das heisst, dass wenn sich die Heizplatte aufgrund der Erwärmung ausdehnt, speziell in der Breite bzw. Dicke, verlängert sich der Reflektionsinnenring entsprechend. Ist das Gegenteil der Fall, zieht sich der Reflektionsinnenring ebenfalls zusammen. Dadurch ist der Reflektionsinnenring immer fest in der Durchgangsbohrung der Heizplatte geführt und präzise positioniert. Es ist ebenfalls vorteilhaft, wenn der Reflektionsinnenring über eine grosse Fläche mit der Heizplatte in Kontakt steht, dies ergibt eine gute Wärmeübertragung.

Der Reflektionsinnenring ist mehrteilig. Vorzugsweise beinhaltet der Reflektionsinnenring zwei Büchsen. Es hat sich auch als vorteilhaft erwiesen, wenn die Büchsen identisch ausgebildet und zueinander spiegelsymmetrisch angeordnet sind. Zudem ist es zu bevorzugen wenn die Büchsen bzw. eine ihre Stirnseiten die Stirnseiten der Heizplatte berühren. Als weitere vorteilhafte Ausgestaltung hat sich gezeigt, dass wenn die Mantelfläche der Durchgangsbohrung der Heizplatte direkt mit der Mantelfläche eines Zylinderbereichs der Büchsen in Kontakt stehen bzw. sich berühren.

Um die Längenveränderbarkeit des Reflektionsinnenrings zu erreichen, weist der Reflektionsinnenring Spannelemente auf, welche die Büchsen gegenseitig verspannen.

Der Reflektionsinnenring weist vorzugsweise einen Bolzen auf, auf dem die Büchsen angeordnet sind und mittels Spannelementen verspannt werden.

Die Heizplatte ist zwischen den beiden Büchsen angeordnet, wobei die Büchsen auf dem Bolzen gelagert sind und mittels Spannelementen die Längenveränderung der Heizplatte aufnehmen.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine schematische Ansicht einer erfindungsgemässen Vorrichtung,
- Fig. 2: einen Teilschnitt durch die Heizplatte mit Reflektionsinnenring und ein eingespanntes Kunststoffprofilende und
- Fig. 3: eine dreidimensionale Ansicht einer Heizplatte mit Reflektionsinnenring.

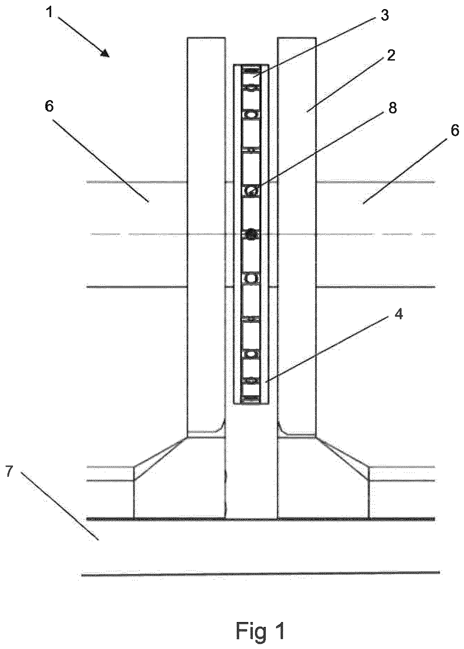

Fig. 1 zeigt eine schematische Ansicht einer erfindungsgemässen Vorrichtung 1 zum stirnseitigen Verschweissen von Kunststoffprofilen 6 vorzugsweise Rohren, wobei die Erwärmung der Kunststoffprofilenden 6 berührungslos erfolgt.

Die Vorrichtung 1 beinhaltet Spannvorrichtungen 2, welche zueinander koaxial angeordnet sind. Die Spannvorrichtungen 2 dienen als Halterung für die Kunststoffprofile 6. Die Spannvorrichtungen 2 sind vorzugsweise auf einer Grundplatte 7 angeordnet, wobei zumindest eine der Spannvorrichtungen 2 sich linear verschieben lässt um die Kunststoffprofile 6 zusammen zu fügen.

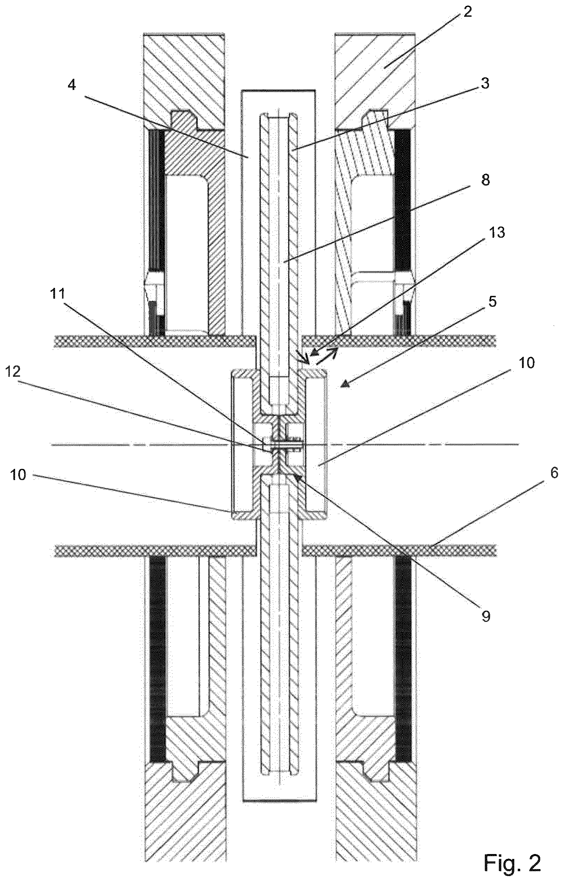

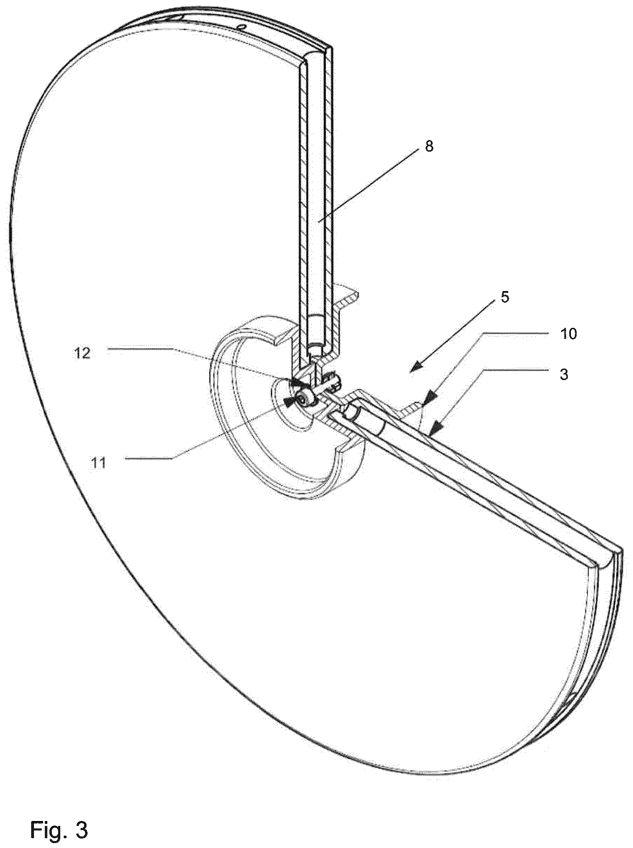

Zwischen den Spannvorrichtungen 2 ist eine Heizplatte 3 angeordnet, die der Erwärmung der Kunststoffprofilenden 6 dient. Zur Erwärmung der Heizplatte 3 sind Heizpatronen (nicht eingezeichnet) in den dafür vorgesehenen Heizpatronenbohrungen 8 in der Heizplatte 3 angeordnet, dies ist aus den Figuren 2 und 3 zu entnehmen.

Um eine Verschweissung in einem weiten Dimensionsbereich von Kunststoffprofilen mit derselben Vorrichtung 1 abdecken zu können, weist die Heizplatte 3 vorzugsweise eine runde Form auf, das heisst es ist vorteilhaft, in Bezug auf die Anordnung der Heizpatronen und das gleichmässige Erwärmen, wenn die Heizplatte als runde Scheibe ausgebildet ist. Die Heizpatronen erstrecken sich vorzugsweise radial in den Heizpatronenbohrungen 8 in der Heizplatte 3, das ermöglicht eine regelmässige und sternförmige Anordnung.

Die Vorrichtung 1 weist zudem einen Reflektionsaussenring 4 auf, welcher um die Heizplatte 3 herum angeordnet ist, vorzugsweise konzentrisch. Der Reflektionsaussenring 4 ist breiter als die Heizplatte 3 und ragt jeweils über beide Seiten der Heizplatte 3 hinaus. Dies ermöglicht die Reflektion der Wärme- bzw. IR-Strahlen der Heizplatte 3. Das heisst, die von der Heizplatte 3 abgehenden Wärme-bzw. IR-Strahlen 13, die an der Innenfläche des Reflektionsaussenrings 4 auftreffen werden dort reflektiert und auf die Mantelaussenfläche des Kunststoffprofils 6 projiziert wodurch das Kunststoffprofil 6 bzw. Rohr auch von aussen aufgeheizt wird. Um nun die Erwärmung des Kunststoffprofils 6 zu optimieren indem, eine möglichst gleichmässige Erwärmung erfolgt, werden die Wärmestrahlen bzw. IR-Strahlen 13 auch auf die Kunststoffprofilinnenseite projiziert. Dies wird durch den Reflektionsinnenring 5 erreicht. Der Reflektionsinnenring 5 ist an der Heizplatte 3 angeordnet und reflektiert die Wärmestrahlen bzw. IR-Strahlen auf die Innenmantelfläche des Kunststoffprofils 6.

Aufgrund des Herstellverfahrens der Heizplatte 3 weist die Heizplatte 3 eine Durchgangsbohrung 9 im Zentrum auf. Diese dient hauptsächlich dem Anbringen der radial verlaufenden Bohrungen 8 für die Heizpatronen. Die Bohrungen 8 für die Heizpatronen werden vorzugsweise gebohrt und anschliessend ausgerieben dies ist bei Heizplatten 3 die grösser dimensioniert sind nicht durchgehend möglich, weshalb im Zentrum der Heizplatte 3 eine Durchgangsbohrung 9 angeordnet ist, die das Austreten der Späne beim Bohren und Ausreiben ermöglicht.

Der Reflektionsinnenring 5 ist in der Durchgangsbohrung 9 der Heizplatte 3 angeordnet dies bringt der Vorteil mit sich, dass die Durchgangsbohrung 9 geschlossen ist und eine Luftzirkulation die die Wärme abführen würde unterdrückt werden kann. Der konzentrisch in der Heizplatte 3 angeordnete Reflektionsinnenring 5 beinhaltet vorzugsweise zwei Büchsen 10, wobei die Büchsen 10 vorzugsweise identisch ausgebildet sind. Die Büchsen 10 des Reflektionsinnenrings 5 sind spiegelsymmetrisch zueinander angeordnet, dadurch können sie optimal in die Durchgangsbohrung 9 eingesetzt werden. Die Büchsen 10 sind vorzugsweise auf einem Bolzen 11 gelagert, der bspw. als einfache Schraube mit Muttern ausgebildet sein kann. Um die Breitenveränderung der Heizplatte 3 aufgrund ihrer Temperaturveränderungen aufzunehmen zu können, weist der Reflektionsinnenring 5 Spannelemente 12 auf, die dem Reflektionsinnenring 5 eine Längenveränderung ermöglichen und dennoch gewährleisten, dass der Reflektionsinnenring 5 verdrehsicher und spielfrei in der Durchgangsbohrung 9 angeordnet ist.

Das heisst, erwärmt sich die Heizplatte 3 und dehnt sich entsprechend in der Breite bzw. Dicke aus, zieht sie die beiden auf dem Bolzen 11 gelagerten Büchsen 10 auseinander, gegen die Kraft der Spannelemente 12. Kühlt sich die Heizplatte 3 wieder ab, zieht sie sich auch in der Breite wieder zusammen und damit die Büchsen 10 sich auch wieder zusammenschieben, drücken die Spannelemente 12 diese zusammen. Somit ist sichergestellt, dass der Reflektionsinnenring 5 sich entsprechend der Breitenveränderung der Heizplatte 3 verhält und in der Durchgangsbohrung 9 geführt ist.

In Fig. 2 sind die Wärme- bzw. IR-Strahlen 13 durch Pfeile dargestellt, die die Reflektion am Aussenumfang bzw. an der äusseren Mantelfläche des Reflektionsinnenrings 5 darstellen.

Die Wärmestrahlung 13 abgehend von der Heizplatte 3 wird am Reflektionsinnenring 5 reflektiert und auf die innere Mantelfläche des Kunststoffprofils 6 bzw. Rohres projiziert.

Die Kunststoffprofilenden 6 werden aufgrund der vorliegenden Erfindung mit Wärmestrahlen- bzw. IR-Strahlen 13 erwärmt die stirnseitig auf das Profilende 6 auftreffen wie auch über die Strahlen, die die innere und äussere Mantelfläche des Kunststoffprofils 6 erwärmen aufgrund der Reflektion am inneren und äusseren Reflektionsrings 4, 5. Dies ergibt eine gleichmässige Erwärmung des Profilendes 6 was wiederum eine gute Wulst und dementsprechend eine gute Schweissung ergeben.

### Bezugszeichenliste

- 1: Vorrichtung
- 2: Spannvorrichtung
- 3: Heizplatte
- 4: Reflektionsaussenring
- 5: Reflektionsinnenring
- 6: Kunststoffprofil / Rohr
- 7: Grundplatte
- 8: Bohrung für Heizpatrone
- 9: Durchgangsbohrung
- 10: Büchse
- 11: Bolzen
- 12: Spannelement
- 13: Wärme- bzw. IR-Strahlen

## Patentansprüche

1. Vorrichtung (1) zum stirnseitigen Verschweissen von Kunststoffprofilen (6) vorzugsweise Rohren beinhaltend Spannvorrichtungen (2) zur Halterung der Kunststoffprofile (6) in koaxialer Lage zueinander, eine Heizplatte (3) zur Erzeugung der Wärmestrahlen zum berührungslosen Aufheizen der Kunststoffprofilenden (6) und einen Reflektionsaussenring (4) zur Reflektion der Wärmestrahlung an die Kunststoffprofilaussenseite, **dadurch gekennzeichnet, dass** an der Heizplatte (3) ein Reflektionsinnenring (5) angeordnet ist, wobei der Reflektionsinnenring (5) die Wärmestrahlen (13) der Heizplatte (3) an die Kunststoffprofilinnenseite reflektiert.

2. Vorrichtung (1) nach Anspruch 1, **dadurch gekennzeichnet, dass** die Heizplatte (3) im Zentrum eine Durchgangsbohrung (9) aufweist, wobei die Heizplatte (3) vorzugsweise eine runde Aussenkontur aufweist.

3. Vorrichtung (1) nach Anspruch 2, **dadurch gekennzeichnet, dass** der Reflektionsinnenring (5) konzentrisch in der Durchgangsbohrung (9) der Heizplatte (3) angeordnet ist.

4. Vorrichtung (1) nach einem der Ansprüche 1 bis 3, **dadurch gekennzeichnet, dass** der Reflektionsinnenring (5) längenveränderbar ausgebildet ist.

5. Vorrichtung (1) nach einem der Ansprüche 1 bis 4, **dadurch gekennzeichnet, dass** der Reflektionsinnenring (5) wärmeleitfähig ist.

6. Vorrichtung (1) nach einem der Ansprüche 1 bis 5, **dadurch gekennzeichnet, dass** der Reflektionsinnenring (5) eine maximale Rauheit Ra 1.2µm aufweist.

7. Vorrichtung (1) nach einem der Ansprüche 1 bis 4, **dadurch gekennzeichnet, dass** der Reflektionsinnenring (5) zwei Büchsen (10) aufweist.

8. Vorrichtung (1) nach einem der Ansprüche 1 bis 5, **dadurch gekennzeichnet, dass** der Reflektionsinnenring (5) Spannelemente (12) aufweist.

9. Vorrichtung (1) nach einem der Ansprüche 5 oder 6, **dadurch gekennzeichnet, dass** die Büchsen (10) des Reflektionsinnenrings (5) mittels Bolzen (11) und Spannelementen (12) miteinander längenveränderbar verbunden sind.

## Claims

1. Device (1) for end-side welding of plastic profiles (6), preferably pipes, containing tensioning devices (2) for retaining the plastic profiles (6) in a coaxial position in relation to one another, a heating plate (3) for generating heat rays for contact-free heating up of the plastic profile ends (6) and a reflection outer ring (4) for reflection of the heat radiation onto the plastic profile outer side, **characterized in that** a reflection inner ring (5) is arranged on the heating plate (3), wherein the reflection inner ring (5) reflects the heat rays (13) of the heating plate (3) onto the plastic profile inner side.

2. Device (1) according to Claim 1, **characterized in that** the heating plate (3) has a through-hole (9) in the centre, wherein the heating plate (3) preferably has a round outer contour.

3. Device (1) according to Claim 2, **characterized in that** the reflection inner ring (5) is arranged concentrically in the through-hole (9) of the heating plate (3).

4. Device (1) according to any one of Claims 1 to 3, **characterized in that** the reflection inner ring (5) is formed to have a changeable length.

5. Device (1) according to any one of Claims 1 to 4, **characterized in that** the reflection inner ring (5) is capable of conducting heat.

6. Device (1) according to any one of Claims 1 to 5, **characterized in that** the reflection inner ring (5) has a maximum roughness Ra 1.2µm.

7. Device (1) according to any one of Claims 1 to 4, **characterized in that** the reflection inner ring (5) has two bushings (10).

8. Device (1) according to any one of Claims 1 to 5, **characterized in that** the reflection inner ring (5) has tensioning elements (12).

9. Device (1) according to any one of Claims 5 or 6, **characterized in that** the bushings (10) of the reflection inner ring (5) are connected to one another with a changeable length by means of bolts (11) and tensioning elements (12).

## Revendications

1. Dispositif (1) de soudage frontal de profilés (6) en matière synthétique, de préférence de tubes contenant des dispositifs de serrage (2) destinés à maintenir les profilés (6) en matière synthétique dans une position coaxiale les uns par rapport aux autres, une plaque chauffante (3) destinée à générer les rayons thermiques destinés à chauffer sans contact les extrémités (6) des profilés en matière synthétique et un anneau extérieur réfléchissant (4) destiné à réfléchir le rayonnement thermique du côté extérieur des profilés en matière synthétique, **caractérisé en ce qu'**un anneau intérieur réfléchissant (5) est disposé sur la plaque chauffante (3), l'anneau intérieur réfléchissant (5) réfléchissant les rayons thermiques (13) de la plaque chauffante (3) vers le côté intérieur des profilés en matière synthétique.

2. Dispositif (1) selon la revendication 1, **caractérisé en ce que** la plaque chauffante (3) comporte un trou traversant (9) au centre, la plaque chauffante (3) présentant de préférence un contour extérieur rond.

3. Dispositif (1) selon la revendication 2, **caractérisé en ce que** l'anneau intérieur réfléchissant (5) est disposé concentriquement dans le trou traversant (9) de la plaque chauffante (3).

4. Dispositif (1) selon l'une des revendications 1 à 3, **caractérisé en ce que** l'anneau intérieur réfléchissant (5) est conçu pour être de longueur variable.

5. Dispositif (1) selon l'une des revendications 1 à 4, **caractérisé en ce que** l'anneau intérieur réfléchissant (5) est conducteur de chaleur.

6. Dispositif (1) selon l'une des revendications 1 à 5, **caractérisé en ce que** l'anneau intérieur réfléchissant (5) présente une rugosité maximale Ra de 1,2 µm.

7. Dispositif (1) selon l'une des revendications 1 à 4, **caractérisé en ce que** l'anneau intérieur réfléchissant (5) comporte deux douilles (10).

8. Dispositif (1) selon l'une des revendications 1 à 5, **caractérisé en ce que** l'anneau intérieur réfléchissant (5) comporte des éléments de serrage (12) .

9. Dispositif (1) selon l'une des revendications 5 ou 6, **caractérisé en ce que** les douilles (10) de l'anneau intérieur réfléchissant (5) sont reliées entre elles de manière réglable en longueur au moyen de boulons (11) et d'éléments de serrage (12).
